Europäisches Patentamt

(19) **European Patent Office**

Office européen des brevets

(11) Numéro de publication: **0 234 148**
**B1**

(12) **FASCICULE DE BREVET EUROPEEN**

(45) Date de publication du fascicule du brevet:
07.11.90

(51) Int. Cl.⁵: **C08L 97/02**, C08G 18/54,
C08G 18/80, C09J 201/02
// (C08L97/02, 75:00)

(21) Numéro de dépôt: **86402761.0**

(22) Date de dépôt: **11.12.86**

(54) Procédé de fabrication de panneaux de particules et de panneaux de contreplaqué.

(30) Priorité: **30.12.85 FR 8519392**

(43) Date de publication de la demande:
**02.09.87 Bulletin 87/36**

(45) Mention de la délivrance du brevet:
**07.11.90 Bulletin 90/45**

(84) Etats contractants désignés:
**AT BE CH DE ES GB GR IT LI LU NL SE**

(56) Documents cités:
**FR-A- 2 371 292**
**US-A- 4 173 594**
**US-A- 4 209 433**

(73) Titulaire: **NORSOLOR S.A., Tour Aurore Place des Reflets, F-92080 Paris la Défense Cédex 5(FR)**

(72) Inventeur: **Garrigue, Roger Gilbert, 23 rue du Capitaine Escudié, F-31000 Toulouse(FR)**
Inventeur: **Lalo, Jack, 116, avenue Saint Exupéry, F-31400 Toulouse(FR)**

(74) Mandataire: **Rieux, Michel, c/o NORSOLOR Service Propriété Industrielle B.P. 57, F-62670 Mazingarbe(FR)**

**Description**

La présente invention concerne un procédé de fabrication de panneaux de particules et de panneaux contreplaqué, elle a plus particulièrement pour objet un procédé mettant en oeuvre des aminoplastes ou des phénoplastes qui conduit à des panneaux finis présentant des émanations de formol réduites et possédant des propriétés mécaniques améliorées.

Les panneaux de particules sont habituellement fabriqués par pressage à chaud d'une masse de copeaux de bois, de fibres de bois ou d'une autre matière lignocellulosique en mélange avec des liants et en particulier des solutions des résines urée-formol, mélamine-urée-formol. Les températures de pressage sont généralement d'environ 150 à 220°C afin d'obtenir une bonne adhésion des copeaux pour un délai de fabrication acceptable mettant en oeuvre des pressions élevées jusqu'à 70 kg/cm².

Le principal inconvénient des résines aminoplastes est de provoquer des émanations élevées de formol libre. On a essayé de réduire le taux de formol libre en mettant au point divers procédés de fabrication : malheureusement lorsque l'on veut atteindre des taux de formol particulièrement bas, l'expérience montre que cet objectif s'accompagne d'une dégradation des propriétés mécaniques des panneaux finis. On a aussi proposé pour supprimer le formol libre, l'utilisation de résines dépourvues de formol en particulier les résines à base de solutions d'isocyanates. Malheureusement le problème du formol est remplacé par celui des isocyanates dont l'action sur l'homme est plus néfaste et plus durable que ne l'est le formol puisqu'on a mis en évidence la présence de groupes isocyanates libres dans des panneaux plusieurs années après leur fabrication. De plus la mise en oeuvre de telles résines sur les presses posent de sérieux problèmes de démoulage à cause de l'affinité des isocyanates pour les parties métalliques. Il existe aussi des procédés mettant en oeuvre des mélanges mixtes de résines aminoplastes et de diisocyanates aromatiques : de tels procédés conduisent à des durées de vie limitées en ce qui concerne les mélanges collants. La mise en oeuvre de procédés consistant à pulvériser séparément les deux liants sur les copeaux est délicate à cause du faible taux d'isocyanate qu'il est économiquement possible d'utiliser.

Les paneaux de contreplaqué sont fabriqués à partir de résines phénoliques et de placage de bois déroulé ou tranché et contrecollé à fils croisés par pressage à chaud à des températures comprises entre 80 et 160 °C et des pressions variant entre 6 et 20 bars suivant les essences de bois. Dans la fabrication des panneaux contreplaqué les inconvénients résident d'une part par le fait que les résines phénoliques sont peu réactives au pressage et d'autre part ces résines nécessitent la mise en oeuvre de bois sec.

Le besoin se fait donc sentir de mettre au point des résines aminoplastes présentant des taux de formol libre réduits et des phénoplastes ne présentant pas les inconvénients précités.

La présente invention concerne un procédé de fabrication de panneaux de particules et de panneaux contreplaqué selon lequel l'encollage est réalisé à l'aide de mélanges collants à base de résines aminoplastes ou phénoplastes, le pressage étant réalisé à l'aide de presses chauffées caractérisé en ce que les mélanges collants contiennent un mélange de résines aminoplastes ou de résines phénoplastes et une solution de diisocyanate bloqué par la butanone-2 oxime.

Selon une autre caractéristique du procédé de l'invention la solution d'isocyanate bloqué par la butanone-2 oxime est constitué d'un isocyanate aromatique, de butanone-2 oxime et d'un solvant aromatique.

Le procédé de la présente demande consiste à mette en oeuvre dans des mélanges collants à base de résines aminoplastes et phénoplastes une solution de diisocyanate bloqué par la butanone-2 oxime. Les diisocyanates qui conviennent pour la mise en oeuvre de l'invention sont choisis parmi le diisocyanato-4,4' diphénylméthane appelé M.D.I.. On a en effet trouvé que les autres diisocyanates connus comme le 2,4 ou 2,6 toluylénediisocyanate (T.D.I.) ne convenaient pas : en effet la réaction du T.D.I. bloqué avec la butanone-2 oxime avec le solvant aromatique provoque une prise en masse. La préparation du diisocyanate bloqué par la butanone-2 oxime se fait simplement par addition des réactifs : à savoir M.D.I., butanone-2 oxime et solvant aromatique à température ambiante. On additionne le M.D.I. avec la butanone-2 oxime et le solvant aromatique. On met en oeuvre 100 parties de M.D.I. avec 60 à 100 parties de butanone-2 oxime, le solvant aromatique étant utilisé en quantité telle que le pourcentage en poids soit dans la solution finale compris entre 35 et 40% pour 60 à 65% du mélange butanone-2 oxime + M.D.I.. Selon l'invention par solvant aromatique on entend le toluène, le xylène et le benzène.

On a trouvé que tous les solvants organiques ne convenaient pas pour la préparation des solutions de M.D.I. bloqué selon l'invention. C'est ainsi qu'on a trouvé que le M.D.I. bloqué par la butanone-2 oxime est insoluble dans l'acétate d'éthyle, l'acétate de butyle, l'acétate de 2-éthoxyéthyle, le cyclohexane et le white spirit. On a aussi trouvé que lorsque le M.D.I. bloqué était soluble dans des solvants comme l'acétonitrile, l'acétone, le diméthylformamide, l'addition de la solution aux résines aminoplastes et phénoplastes conduisait à une phase hétérogène. Selon une autre caractéristique de l'invention le procédé de la présente invention est mis en oeuvre en utilisant 3 à 20% en poids du produit de réaction M.D.I. plus butanone-2 oxime par rapport au poids de la résine sèche, et de préférence, de 6 à 12% en poids : au-delà de 20% en poids la mise en oeuvre de telles quantités n'est pas économique, en dessous de 3% l'effet est trop faible.

Les solutions de M.D.I. bloqué par la butanone-2 oxime peuvent être émulsionnées dans les résines aminoplastes ou phénoplastes : on obtient ainsi des solutions qui restent homogènes pendant près de 15 jours. L'utilisation de ces solutions dans les résines aminoplastes et phénoplastes permet grâce aux températures élevées de ces résines de débloquer le M.D.I. Mises en oeuvre avec les aminoplastes ces solutions permettent d'obtenir des panneaux de particules présentant des émanations réduites de formol à propriétés mécaniques améliorées; utilisées avec les résines phénoplastes ces solutions ont un effet accélérateur et aussi lorsqu'elles sont mises en oeuvre avec des catalyseurs. Elles permettent aussi le collage sur bois humide. Quelque soit les résines utilisées les panneaux obtenus ne contiennent pas des groupes isocyanates libres.

Les exemples suivants illustrent la présente invention.

## EXEMPLE 1

On utilise une colle mélamine urée-formol qui présente les caractéristiques suivantes :
Viscosité : 280 m Pa.s
Extrait sec : 64,4 %
pH : 9,3
$F/NH_2$ : 0,53 M.
Taux mélamine : 20 % par rapport à la solution de résine.

On prépare une solution de M.D.I. bloqué à partir de 70 parties en poids de butanone-2-oxime, 100 parties en poids de diisocyanato-4,4'-diphénylméthane et 114 parties de toluène. On agite le mélange réactionnel à température ambiante pendant 30 minutes.

On fabrique des panneaux avec différents mélanges collants.

Les conditions de fabrication des panneaux sont les suivantes :
Epaisseur des panneaux : 17 mm
Matériau : mélange de copeaux de bois
Durcisseur : 1,5 % de chlorure d'ammonium sec par rapport à la résine sèche
Prépressage : 1 minute à une pression de 5 daN/cm2
Température de pressage : 180° C
Pression de pressage : 40 daN/cm2
Durée de pressage : 4 minutes
Stabilisation : 1 semaine à 20° C avec une humidité relative de 65 %.

Les caractéristiques des panneaux obtenus avec et sans M.D.I. bloqué sont résumées dans le tableau 1.

## TABLEAU 1

| Encollage % colle sèche/copeaux secs | 10 | 12 | 9 | 10 | 10 |
|---|---|---|---|---|---|
| Solution M.D.I. bloqué % par rapport résine sèche | 0 | 0 | 10 | 15 | 20 |
| Masse volumique (kg/m3) | 670 | 677 | 671 | 689 | 683 |
| Tractions (daN/cm2) sec | 11,0 | 11,2 | 11,1 | 11,9 | 11,0 |
| V 100 | 1,5 | 1,65 | 1,7 | 2,05 | 2,85 |
| V 313 | 4,6 | 4,6 | 4,3 | 5,0 | 5,7 |
| Gonflement (%) V 20 | 6,15 | 5,9 | 6,5 | 6 | 5,8 |
| V 313 | 9,4 | 7,9 | 9,9 | 8 | 7,9 |
| Humidité (%) | 8,9 | 9,1 | 8,9 | 8,9 | 8,7 |
| Formol perforateur (mg/100g) | 17,3 | 17,1 | 14,0 | 7,3 | 7,3 |

## EXEMPLE 2

L'exemple 1 est répété en mettant en oeuvre une résine mélamine urée-formol qui présente les caractéristiques suivantes :
Viscosité : 230 mPa.s
Extrait sec : 66%
$F/NH_2$ : 0,53 M
% mélamine par rapport solution de résine : 21%
Les conditions de fabrication de panneaux sont identiques à celles de l'exemple 1. Le tableau 2 résume les résultats obtenus.

## TABLEAU 2

| Encollage % colle sèche/copeaux secs Solution M.D.I. bloqué % par rapport résine sèche | 10 0 | 9 10 | 9 10 |
|---|---|---|---|
| Emulsification | / | NON | OUI |
| Masse volumique (kg/m3) | 678 | 672 | 680 |
| Tractions (daN/cm2) sec | 14,5 | 13,5 | 12,4 |
| V 100 | 2,75 | 2,65 | 2,95 |
| V 313 | 6,7 | 6,1 | 6,1 |
| Gonflement (%) V 20 | 5,9 | 6,1 | 5,9 |
| V 313 | 8,1 | 9,9 | 8,1 |
| Humidité (%) | 7,8 | 7,8 | 7,7 |
| Formol perforateur (mg/100 g) | 17,6 | 6,5 | 6,7 |

L'émulsification signifie que la solution de M.D.I. bloqué a été émulsionée dans la résine mélamine-urée-formol avant la préparation du mélange collant.

## EXEMPLE 3

Des panneaux de contreplaqué sont fabriqués à partir d'une résine phénolique qui présente les caractéristiques suivantes :
Extrait sec : 45%
Viscosité : 500 mPa.s
Temps gel à 100 °C : 23 minutes
On prépare un mélange collant à partir des ingrédients suivants :
Résine : 100 parties
Farine grignons d'olive : 17 parties
Craie : 25 parties
Farine de blé : 3 parties
On ajoute à ce mélange collant 10 parties solution de M.D.I. bloqué par la butanone-2 oxime fabriqué dans l'exemple 1.
Les conditions de fabrication des panneaux de contreplaqué sont les suivantes :
Composition : 5 plis de pin maritime d'épaisseur 32/10 (mm)
Humidité : 2 %
Attentes : Ouverte : 6 minutes à 20°C

4

Fermée : 6 minutes à 20°C
Prepressage : 6 minutes
Température de pressage: 145 °C
Pression : 12 bars
Durée : Variable

Les panneaux fabriqués ont été contrôlés par ouverture au couteau après immersion dans de l'eau à 20°C pendant 24 heures. Pour cela on utilise des éprouvettes ayant une dimension de 20 cm x 10 cm. Après ouverture au couteau on attribue une note de 0 à 10 représentant le pourcentage de fibres de bois restant dans le plan de collage après arrachement (10 = 100% de bois). Un collage est jugé satisfaisant pour une note ≥ 4.

Le tableau 3 résume les résultats obtenus :

## TABLEAU 3

| FORMULE | TEMOIN | | | | AVEC M.D.I. BLOQUE | | | |
|---|---|---|---|---|---|---|---|---|
| Temps de cuisson | 12 min 30 | | 11 min 30 | | 11 min 30 | | 9 min 30 | |
| Plis contrôlés | Face | Int. | Face | Int. | Face | Int. | Face | Int. |
| Note | 5,8 | 5,2 | 6,0 | 4,5 | 6,7 | 6,7 | 6,0 | 6,0 |

## EXEMPLE 4

L'exemple 3 est répété sauf que pour la fabrication des panneaux le taux d'humidité est de 7%.

Lors de l'addition de M.D.I. bloqué à la résine phénolique on additionne de l'octoate de zinc qui est un catalyseur connu de la réaction isocyanate sur les alcools dans la technologie des polyuréthanes.

Le tableau 4 résume les résultats obtenus.

## TABLEAU 4

| FORMULATION | | | | |
|---|---|---|---|---|
| Résine phénolique | 100 | 100 | 100 | 100 |
| Solution MDI bloqué | / | 5 | 10 | 10 |
| Octoate d'étain | / | / | / | 0,05 |
| Craie | 30 | 30 | 30 | 30 |
| Farine grignons d'olives | 18 | 18 | 18 | 18 |
| Seigle | 3,8 | 3,8 | 3,8 | 3,8 |
| Eau | 5 | 5 | 5 | 5,5 |
| OUVERTURE COUTEAU | | | | |
| Face | 7,7 | 7,5 | 6,5 | 6,0 |
| Intérieur | 2,5 | 2,7 | 5,3 | 6,2 |

### EXEMPLE 5

On met en oeuvre une résine mélamine-urée formol vendue par la Société CdF Chimie sous la marque PRESSAMINE 308.

Cette résine présente les caractéristiques suivantes :
Extrait sec : 65%
Viscosité : 650 mPa.s
pH : 9,2
$F/NH_2$ : 0,73
% mélamine : 21%
Conditions d'application : identiques à celles de l'exemple 1

Le tableau 5 résume les résultats obtenus.

## TABLEAU 5

| | | |
|---|---|---|
| %colle sèche/copeaux secs | 10 | 10 |
| MDI bloqué/résine sèche | 10 | 0 |
| Tractions (daN/cm²)sec/densité Kg/m³ | 10/680 | 10/680 |
| V 100/densité | 4,3/680 | 3,6/680 |
| V 313/densité | 7,5/645 | 7,2/645 |
| Gonflement (%) V 20 | 3,5 | 3,6 |
| V 313 | 4,6 | 5,1 |
| Formol perforateur mg/100g | 48 | 62,1 |

Les propriétés mécaniques ont été déterminées selon les normes suivantes
Epaisseur, masse volumique : Norme NFB 51222
Humidité : Norme NFB 51221
Traction V 100 : Norme NFB 51262
Traction : Norme NFB 51250
Gongflements : Norme NFB 51251
Traction V 313 : Norme NFB 51263
Teneur en formol perforateur : extraction au perforateur et dosage du formol à l'aide d'acide chromotropique.

## Revendications

1. Procédé de fabrication de panneaux de particules et de panneaux contreplaqué selon lequel l'encollage est réalisé à l'aide de mélange collants à base de résines aminoplastes ou phénoplastes, le pressage étant réalisé à l'aide de presses chauffée caractérisé en ce que les mélanges colants contiennent un mélange de résines aminoplastes ou de résines phénoplastes et une solution de diisocyanato-4,4' diphénylméthane (MDI), bloqué par le butanone-2 oxime.

2. Procédé selon la revendication 1 caractérisé en ce que le MDI bloqué est préparé par addition de MDI, de butanone-2-oxime et d'un solvant aromatique.

3. Procédé selon la revendication 2 caractérisé en ce que le solvant aromatique est choisi parmi le toluène, le xylène et le benzène.

4. Procédé selon l'une des revendications 1 à 3 caractérisé en ce que l'on utilise 3 à 20% du produit de réaction MDI plus butanone-2 oxime par rapport au poids de résine aminoplaste ou phénoplaste sèche.

## Patentansprüche

1. Verfahren zur Herstellung von Span- und Sperrholzplatten, bei dem die Verleimung mit Hilfe von Klebemittelmischungen auf Basis von Aminoplast- oder Phenoplastharzen erfolgt, wobei das Verpressen mittels Heizpressen bewerkstelligt wird, dadurch gekennzeichnet, daß die Klebemittelmischungen ein Gemisch aus Aminoplast- oder Phenoplastharzen und einer Lösung von durch Butanon-2-oxim geblocktem Diisocyanat-4,4' diphenylmethan (MDI) enthalten.

2. Verfahren nach Anspruch 1, dadurch gekennzeichnet, daß das geblockte MDI durch Addition von MDI, Butanon-2-oxim und einem aromatischen Lösungsmittel erfolgt.

3. Verfahren nach Anspruch 2, dadurch gekennzeichnet, daß das aromatische Lösungsmittel ausgewählt wird aus der Gruppe bestehend aus Toluol, Xylol und Benzol.

4. Verfahren nach einem der Ansprüche 1 bis 3, dadurch gekennzeichnet, daß 3 bis 20% an Reaktionsprodukt MDI und Butanon-2-oxim, bezogen auf das Gewicht des trockenen Aminoplast- oder Phenoplastharzes, eingesetzt werden.

## Claims

1. Process for the manufacture of particle boards and plywood boards according to which the application of the adhesive is carried out with the use of adhesive mixtures based on aminoplastic or phenoplastic resins, the pressing being carried out with the aid of heated presses, which is characterized in that the adhesive mixtures contain a mixture of aminoplastic resins or of phenoplastic resins and a solution of 4,4'-diisocyanatodiphenylmethane (MDI), blocked by 2-butanone oxime.

2. Process according to Claim 1, characterized in that the blocked MDI is prepared by the addition of MDI, of 2-butanone oxime and aromatic solvent..

3. Process according to Claim 2, characterized in that the aromatic solvent is chosen from toluene, xylene and benzene.

4. Process according to one of Claims 1 to 3, characterized in that 3 to 20% of the MDI plus 2-butanone oxime reaction product is employed relative to the weight of dry aminoplastic or phenoplastic resin.